# EUROPÄISCHE PATENTANMELDUNG

(11) **EP 2 975 009 A1**
(43) Veröffentlichungstag der Anmeldung: **20.01.2016**
(21) Anmeldenummer: 14176880.4
(22) Anmeldetag: 14.07.2014
(51) Int. Cl.: C04B 7/60, C04B 7/47, C04B 7/36, C04B 7/43

(54) **Verfahren zur Behandlung und Verwertung von Bypassstäuben und Bypassgasen aus einer Industrieanlage**

(71) Anmelder: A TEC Holding GmbH, 9585 Gödersdorf (AT)
(72) Erfinder: Kehrmann, Alexander, 46509 Xanten (DE)
(74) Vertreter: Hoffmann Eitle

(57) **Zusammenfassung**

Die vorliegende Erfindung betrifft ein Verfahren zur Behandlung und Verwertung von Bypassstäuben und Bypassgasen aus einer Industrieanlage, die einen oder mehrere Drehrohröfen umfasst. Bei der Industrieanlage kann es sich um eine Zementherstellungsanlage oder eine Klinkerherstellungsanlage handeln.

## Beschreibung

Die vorliegende Erfindung betrifft ein Verfahren zur Behandlung und Verwertung von Bypassstäuben und Bypassgasen aus einer Industrieanlage, die mindestens einen Drehrohrofen umfasst. Bei der Industrieanlage kann es sich beispielsweise um eine Zementherstellungsanlage oder eine Klinkerherstellungsanlage handeln.

Bei dem Betrieb von Industrieanlagen, welche einen Drehrohrofen umfassen, fallen in der Regel große Mengen Stäube an. So werden beispielsweise bei der Erzeugung von einer Tonne Zement im Verlauf der Produktion etwa 2,6 - 2,8 t Rohstoffe, Kohle, Zementklinker, ggf. weitere Hauptbestandteile sowie Gips und/oder Anhydrit als Erstarrungsregler gemahlen. Davon werden 5 % bis 10 % in den Trocknern, Mühlen, Öfen, Kühlern und Transporteinrichtungen aufgewirbelt. Der dabei entstehende Staub wird an verschiedenen Stellen abgesaugt. Auf diese Weise fallen staubhaltige Abgas- und Abluftströme an, die je nach Verfahren und Betriebsweise 6.000 bis 14.000 m³ je t Zement betragen. Der Staub wird in Staubabscheidern vom Gas- oder Luftstrom getrennt und im Allgemeinen in die Produktion zurückgeführt (F. W. Locher, "Zement: Grundlagen der Herstellung und Verwendung", Verl. Bau und Technik, Düsseldorf 2000).

Das Zurückführen der Stäube in den Herstellungsprozess kann allerdings zu unerwünschten Nebenwirkungen führen, beispielsweise zur Anreicherung der Chloride in der Industrieanlage und folglich zum Anstieg des Chlorid-Gehalts im resultierenden Produkt. Dabei ist insbesondere für die Zementherstellung ein zu hoher Chlorid-Gehalt nachteilig: gesetzlich sind zur Zeit 0,1% Chlorid im Zement als Grenzwert erlaubt. Ferner führen die flüchtigen Bestandteile der Bypassstäube wie beispielsweise Na₂O, K₂O, Schwefel bzw. Sulfate, Chlor bzw. Chloride, Carbonate und Hydrogencarbonate der Alkali- und Erdalkalimetalle sowie Ammoniumchlorid zu Kreisläufen im Drehrohrofen. Dies führt zur Bildung von Ablagerungen im Ofeneinlaufbereich sowie im Steigschacht. Verursacht durch die hohen Temperaturen im Drehrohrofen verdampfen die flüchtigen Bestandteile z.B. die im Ausgangsmaterial und den Ersatzbrennstoffen enthaltenen Chloride in der Regel. Wenn den heißen Bypassstäuben Wärme entzogen wird (z.B. mittels eines nachgeschalteten Wärmetauschers), kondensieren die Chloride wieder, z.B. im Wärmetauscher. Besonders Wärmetauschanlagen mit und ohne Kalzinator sind von diesem Problem betroffen. Damit bilden die Chloride einen Kreislauf, der zu einer Anreicherung im Ofen/Wärmetauscher-System führt, was aus den o.g. Gründen nachteilig ist.

Um das Entstehen der Ablagerung durch die flüchtigen Bestandteile zumindest teilweise zu verhindern, können die flüchtigen Bestandteile wie beispielsweise Chloride durch einen Bypass teilweise oder vollständig abgeführt werden. Ein Bypass bewirkt, dass ein Teilstrom des Ofengases mit dem darin enthaltenen Staub und den vollständig oder teilweise kondensierten Bestandteilen vor Eintritt in den Vorwärmer abgeführt wird. Wenn heiß entstaubt wird, wird dieser als Heißgasbypass bezeichnet. Nachteilig an diesem Verfahren ist der Wärmeverlust der Anlage. Das gefilterte Heißgas kann entweder über einen eigenen Kamin abgeführt werden oder dem Hauptabgasstrom wieder zugeführt werden.

Der Anteil des Bypassgases am gesamten Ofengasstrom beträgt im Allgemeinen 3 - 15%. Durch Abzug einer geringen Gas- und Staubmenge soll die höchste Effizienz an Austrag von flüchtigen Substanzen erreicht werden. Bei einer Abzugsrate von 5% werden hierbei üblicherweise Reduktionsgrade von etwa 80 % des Chlors, <10 % SO₃, < 15% K₂O und < 5% N₂O erreicht (siehe "Gas-Bypass-Anlagen zur Beherrschung von Chlorid-Kreisläufen im Zementwerk", H. Schöffmann, online erhältlich auf den Webseiten der Montanuniversität Loeben).

Patent EP 1 923 366 B1 offenbart ein Verfahren zum Behandeln von Bypassstäuben und Bypassgasen aus der Ziegel-, Zement-oder Klinkerherstellung, das das In-Kontakt-Bringen des Bypassstaubs/-Gases mit einer wässrigen Phase umfasst. Anschließend werden feste bzw. unlösliche Bestandteile durch Filtrieren oder Zentrifugieren abgetrennt und die erhaltene wässrige Phase kann nach einem Schritt zur Abtrennung von unerwünschten Metallen verkocht werden, um die gelösten Bestandteile zurückzugewinnen.

WO 2012/142638 A1 beschreibt ebenfalls ein Verfahren zur Behandlung und Verwertung von Bypassstäuben aus dem Zementherstellungsprozess. Die dabei erhaltene Sole wird entsprechend behandelt, um die vorhandenen Schwermetalle abzutrennen und, anschließend, einer fraktionierten Kristallisation unterzogen. Bei der fraktionierten Kristallisation kann Abwärme aus dem Zementherstellungsprozess, insbesondere aus dem Vorwärmer oder dem Klinkenkühler verwendet werden.

Steigende Preise für fossile Brennstoffe wie Erdöl, Stein- und Braunkohle sowie Erdgas stellen einen immer wichtigeren Kostenfaktor bei dem Betrieb von Industrieanlagen wie zum Beispiel Zementherstellungsanlagen dar. Diese Entwicklung führt zu einem immer höheren Einsatz von Ersatzbrennstoffen (wie z.B. DSD Abfälle, sortierte Müllfraktionen, Tiermehl, Reifen, Lösemittel usw.), die zwar die Brennstoffkosten reduzieren, jedoch zu einem erhöhten Eintrag von unerwünschten Substanzen, wie Chloriden, führen. Im Prozess der Zementerzeugung bilden Chloride jedoch in Kombination mit den ebenfalls in den Prozess eingebrachten schwefelhaltigen Verbindungen eine Grundlage für Betriebsstörungen im Herstellungsprozess.

Des Weiteren ist zu beachten, dass die Zusammensetzung und somit der Brennwert der Ersatzbrennstoffe durchaus hohen Schwankungen unterliegt. Damit die Prozesstemperatur im vorgegebenen Bereich gehalten werden kann, ist es deswegen erforderlich, dass der Drehrohrofen im Falle eines unerwünschten Temperaturanstiegs gekühlt wird. Beispielsweise ist bei der Zementherstellung darauf zu achten, dass der Gehalt an Tricalciumsilicat, das den Hauptbestandteil von Zementklinker bildet, durch eine zu lange Sinterzeit bei Temperaturen über 1350 °C verringert wird. Diese Temperatur sollte daher bei dem Verfahren nicht für zu lange Zeiten überschritten werden.

Zugleich ist darauf zu achten, dass das in dem Drehrohrofen hergestellte Produkt wie z.B. Klinker nach dem Sintern oft rasch abgekühlt werden muss. Im Falle einer Zementherstellungsanlage ist dies deswegen erforderlich, weil sich Tricalciumsilicat unterhalb 1250 °C bei zu langsamer Abkühlung in Calciumoxid und Dicalciumsilicat zersetzt. Dabei ist gerade der Gehalt an Tricalciumsilicat für die Qualität (Hydratation, Festigkeit) des Klinkers ausschlaggebend. Zugleich sollte ein zu hoher Anteil von Dicalciumsilicat im Zement verhindert werden, weil sich Dicalciumsilicat bei Raumtemperatur unter Volumenvergrößerung in eine andere Modifikation verwandelt. Dabei wird Zementklinker zerstört. Des Weiteren führt eine ausreichend rasche Kühlung dazu, dass vermehrt Magnesiumoxid in die Klinkerfasern eingebaut wird, sodass es bei der Härtung des Zementes zu geringeren Treiberscheinungen durch freies Magnesiumoxid kommt.

Um eine effiziente Abkühlung des Produkts nach dem Sintern zu gewährleisten, wird die Außenoberfläche des Rohrofens unterhalb der Sinterzone in der Regel mittels Luftkühlung gekühlt. Für eine ausreichende Luftkühlung ist der Einsatz von starken Luftgebläsen notwendig, was jedoch weitere Betriebskosten durch deren hohen Stromverbrauch verursacht und zu einer erheblichen Lärmbelästigung während der Produktion führt.

### Aufgabe und Ziele der Erfindung

Vor diesem Hintergrund befasst sich die vorliegende Erfindung mit zwei Aufgaben. Zu einem wird hierdurch ein Verfahren zum Behandeln von Bypassstäuben und Bypassgasen aus einer Industrieanlage, die mindestens einen Drehrohrofen umfasst, bereitgestellt, mit dem sich eine effiziente Entfernung der flüchtigen Bestandteile wie Chloride aus Bypassgasen und Bypassstäuben erreichen lässt. Dies erlaubt einen verstärkten Einsatz von preisgünstigen Ersatzbrennstoffen (wie beispielsweise Kunststoffabfälle und Lösungsmittel), die zu einem erhöhten Eintrag von flüchtigen Bestandteilen wie Chloride führen. Zum Anderen befasst sich die vorliegende Erfindung mit dem Problem, das entsprechende Verfahren so zu gestalten, dass eine effizientere Wärmeeinbringung erreicht wird und die Verwendung von Luftkühlung und somit die Lärmbelästigung während der Produktion weitgehend vermieden wird. In einer bevorzugten Ausführungsform ist es somit die Aufgabe der Erfindung, den Energieverbrauch, die Lärmbelästigung und die Abfallprobleme bei der Zement-, Klinker- und Ziegelproduktion zu minimieren und zugleich einen verstärkten Einsatz von Ersatzbrennstoffen zu ermöglichen, wahrend die Produktqualität dennoch ausgezeichnet bleibt.

### Zusammenfassung der Erfindung

Die oben formulierten Aufgaben werden durch das erfindungsgemäße Verfahren gemäß (1)-(25) gelöst:
1. Verfahren zum Behandeln von Bypassstäuben und Bypassgasen aus einer Industrieanlage, die einen Drehrohrofen umfasst, wobei das Verfahren folgende Schritte umfasst:
   a) die Bypassstäube/Bypassgase werden mit einer wässrigen Phase in Kontakt gebracht, wobei es zur Bildung einer wässrigen Lösung kommt, in der wasserlösliche Bestandteile gelöst sind; und
   b) die wässrige Lösung wird auf eine Außenoberfläche des Drehrohrofens aufgetragen.
2. Verfahren gemäß Punkt 1, bei dem während und/oder nach dem Schritt a) die wässrige Lösung, in der wasserlösliche Bestandteile gelöst sind, von wasserunlöslichen Bestandteilen abgetrennt wird.
3. Verfahren gemäß Punkt 2, bei dem die Abtrennung durch Filtrieren oder Zentrifugieren durchgeführt wird.
4. Verfahren gemäß einem der Punkte 2 oder 3, bei dem die wasserunlöslichen Bestandteile einer weiteren Behandlung mit der wässrigen Phase unterzogen werden.
5. Verfahren gemäß einem der Punkte 2 bis 4, bei dem die wasserunlöslichen Bestandteile aus dem Bypassstaub/ Bypassgas nach dem Schritt a) in einen in der Industrieanlage durchgeführten Herstellungsprozess zurückgeführt werden.
6. Verfahren gemäß einem der Punkte 1 bis 5, bei dem während und/oder nach dem Schritt b) die wässrige Lösung auf der Außenoberfläche des Drehrohrofens zumindest teilweise verdampft wird.
7. Verfahren gemäß einem der Punkte 1 bis 6, bei dem während und/oder nach dem Schritt b) die wasserlöslichen Bestandteile als Feststoffe auf der Außenoberfläche des Drehrohrofens abgeschieden werden.
8. Verfahren gemäß Punkt 7, bei dem während und/oder nach dem Schritt b) die wasserlöslichen Bestandteile als Feststoffe von der Außenoberfläche des Drehrohrofens mechanisch abgetrennt werden.
9. Verfahren gemäß einem der Punkte 1 bis 8, bei dem sich die Außenoberfläche des Drehrohrofens, auf die die wässrige Lösung aufgetragen wird, zumindest teilweise in der Sinterzone des Drehrohrofens befindet.
10. Verfahren gemäß einem der Punkte 1 bis 9, bei dem die Auftragung der wässrigen Lösung auf die Außenoberfläche des Drehrohrofens mittels einer Sprühvorrichtung erfolgt.
11. Verfahren gemäß einem der Punkte 1 bis 10, bei dem der Wasserdampf, der während und/oder nach dem Schritt b) gebildet wird, mittels einer Abzugsvorrichtung aufgefangen wird.
12. Verfahren gemäß einem der Punkte 1 bis 11, bei dem die Außenoberfläche des Drehrohrofens, auf die die wässrige Lösung aufgetragen wird, zumindest teilweise mit einem Blech ausgekleidet ist.
13. Verfahren gemäß einem der Punkte 1 bis 12, bei dem die Industrieanlage eine Zementherstellungsanlage oder eine Klinkerherstellungsanlage ist.
14. Verfahren gemäß einem der Punkte 1 bis 13, bei dem der Schritt a) in einer Bypassleitung vorgenommen wird.
15. Verfahren gemäß einem der Punkte 1 bis 14, bei dem vor und/oder während der Durchführung des Schritts a) eine Abtrennung der nicht-flüchtigen Bestandteile vorgenommen wird.
16. Verfahren gemäß Punkt 15, bei dem die vor dem Schritt a) abgetrennten Bestandteile in den in der Industrieanlage durchgeführten Herstellungsprozess zurückgeführt werden.
17. Verfahren gemäß einem der Punkte 1 bis 16, bei dem vor dem Schritt a) keine Abtrennung nicht-flüchtiger Bestandteile vorgenommen wird.
18. Verfahren gemäß einem der Punkte 1 bis 17, bei dem der Schritt a) die Einleitung des Bypassgases/des Bypassstaubs in die wässrige Phase umfasst.
19. Verfahren gemäß einem der Punkte 1 bis 18, bei dem die wässrige Phase wenigstens eine Hilfssubstanz enthält, die aus anorganischen Substanzen (vorzugsweise Chloride, Nitrate, Sulfide und Sulfate der Alkali- und Erdalkalimetalle als auch Ammoniumpolysulfid) und organischen Substanzen (vorzugsweise Salze chelatierender Säuren, wie EDTA) ausgewählt ist.
20. Verfahren gemäß einem der Punkte 1 bis 19, bei dem die im Schritt a) verwendete wässrige Phase kontinuierlich oder in Intervallen umgewälzt oder ersetzt wird und durch frisch zugeführte oder umgewälzte, aufbereitete wässrige Phase ersetzt wird.
21. Verfahren gemäß einem der Punkte 1 bis 20, bei dem der Chloridgehalt der wasserunlöslichen Bestandteile der nach dem Schritt a) erhaltenen Aufschlämmung nach deren Abtrennung weniger als 20%, bevorzugt weniger als 10%, weiterhin stärker bevorzug weniger als 5%, und am stärksten bevorzugt weniger als 2% des Chloridgehalts der in der Industrieanlage verwendeten Ausgangsstoffe beträgt.
22. Verfahren gemäß einem der Punkte 1 bis 21, bei dem während und/oder nach dem Schritt b) die wasserlöslichen Bestandteile der wässrigen Lösung durch eine fraktionierte Kristallisation rückgewonnen werden.
23. Verfahren gemäß einem der Punkte 1 bis 21, bei dem während und/oder nach dem Schritt b) die wasserlöslichen Bestandteile der wässrigen Lösung durch ein Verkochen der wässrigen Lösung rückgewonnen werden.
24. Verfahren gemäß einem der Punkte 1 bis 23, das einen Schritt zur Abtrennung von einem oder mehreren Schwermetallen, insbesondere von As, Be, Cd, Co, Cr, Cu, Hg, Mn, Ni, Pb, Sb, Sn, Te, Tl und/oder V umfasst.
25. Verfahren gemäß Punkt 24, bei dem die Abtrennung der Schwermetallen vor einer Weiterbehandlung der nach der Abtrennung resultierenden wässrigen Lösung zum Erhalt der wasserlöslichen Bestandteile durchgeführt wird.

Weitere Aspekte der vorliegenden Erfindung betreffen eine Industrieanlage gemäß Punkt 26, Produkte gemäß Punkt 27 und 28, ein Zement- oder Klinkerprodukt gemäß Punkt 29 sowie die Verwendung des Produkts gemäß Punkt 27 oder 28:
26. Industrieanlage, insbesondere eine Zementherstellungsanlage oder eine Klinkerherstellungsanlage, die zum Durchführen des Verfahrens nach Punkten 1 bis 25 eingerichtet ist.
27. Produkt, umfassend wasserlösliche Bestandteile, welches nach dem Verfahren gemäß einem der Punkte 1 bis 25 erhältlich ist.
28. Produkt gemäß Punkt 27, das im Wesentlichen, bevorzugt zu mehr als 80 Gew.-%, stärker bevorzugt zu mehr als 90% Gew.-% aus Alkali- und Erdalkalimetallchloriden besteht.
29. Zement- oder Klinkerprodukt, erhältlich durch ein Herstellungsverfahren, das das Verfahren gemäß Punkten 1 bis 25 umfasst.
30. Verwendung des Produkts gemäß Punkt 27 oder 28 als Streusalz, Leckstein, Rohstoff für Elektrolysen zur Chlor- und/oder Alkalihydroxidgewinnung, Flammschutz, Dustbinder, als Düngerkomponente oder zur Glas- bzw. Keramikherstellung.

### Kurze Beschreibung der Zeichnungen

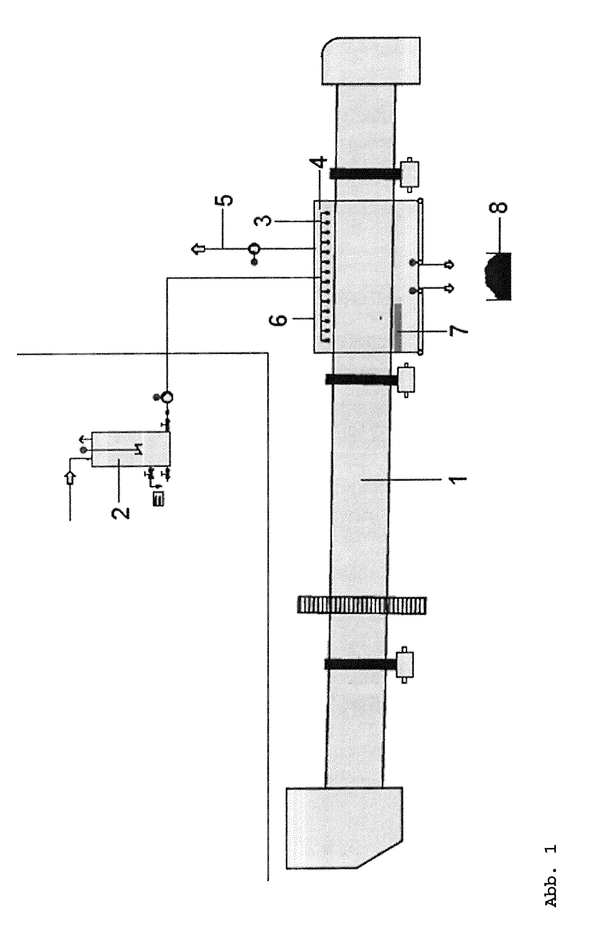

Abbildung 1 veranschaulicht schematisch eine bevorzugte Ausführungsform des Schritts b) des erfindungsgemäßen Verfahrens. Die wässrige Lösung 2 wird mittels einer Sprühvorrichtung 3 auf die Außenoberfläche des Drehrohrofens 1 aufgetragen. Die wasserlöslichen Bestandteile 4 der wässrigen Lösung 2 scheiden sich auf der Außenoberfläche des Drehrohrofens 1 ab und werden anschließend mechanisch abgetrennt. Der im Schritt b) gebildete Wasserdampf 5 wird mittels einer Abzugsvorrichtung 6 aufgefangen und kann beispielsweise kondensiert und als wässrige Phase im Schritt a) verwendet werden. Das fest verbleibende Salz, welches im Wesentlichen aus wasserlöslichen Bestandteilen der wässrigen Lösung besteht, haftet auf der Drehrohroberfläche an und wird mit einem fest installierten Schabeisen 7, das an der unteren Oberseite des Drehrohrofens 1 montiert ist, von der Außenoberfläche des Drehrohrofens 1 mechanisch abgetrennt und fällt in die darunter angeordnete Transporteinrichtung 8.

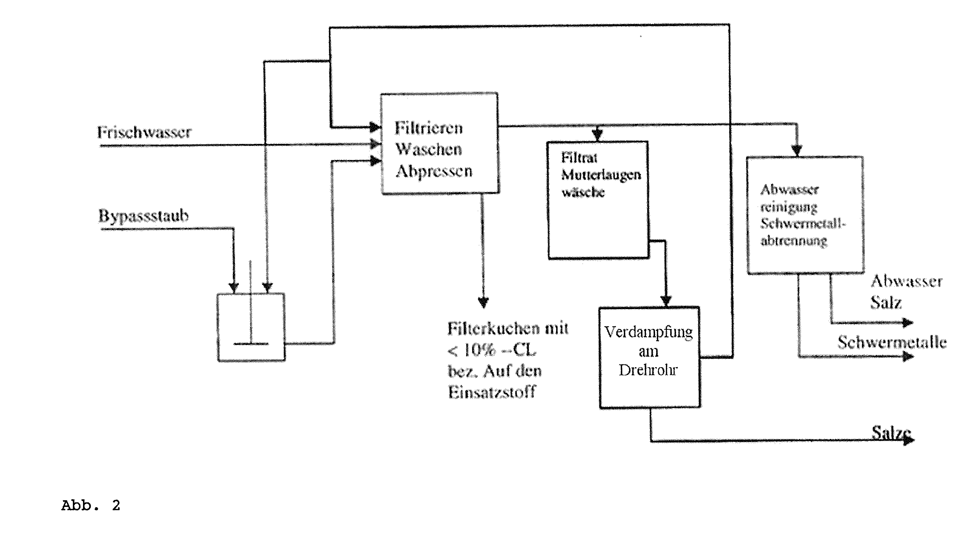

Abbildung 2 ist ein Fließschema, das eine weitere mögliche Ausführungsform des erfindungsgemäßen Verfahrens zeigt. Der Bypassstaub aus dem Klinker-, Ziegel- bzw. Zementherstellungsprozess wird abgeführt, in eine wässrige Phase eingeleitet, diese wird anschließend filtriert und abgepresst, um einen Filterkuchen mit einem Cl-Gehalt von weniger als 10% des Ausgangsstoffes (des Bypassstaubs) zu erhalten. Die resultierende wässrige Lösung kann einer Abwasserreinigung zur Entfernung von Schwermetallen unterzogen werden, und es kann eine Kristallisation durchgeführt werden, um die in dem Filtrat gelösten Salze (z.B. NaCl) zurück zu gewinnen. Der erhaltene Filterkuchen kann ggf. in den Klinker-, Ziegel- bzw. Zementherstellungsprozess zurückgeführt werden. Die resultierende wässrige Lösung (d.h. Filtrat bzw. Mutterlauge) wird anschließend auf die Außenoberfläche des Drehrohrofens aufgetragen und ggf. verdampft.

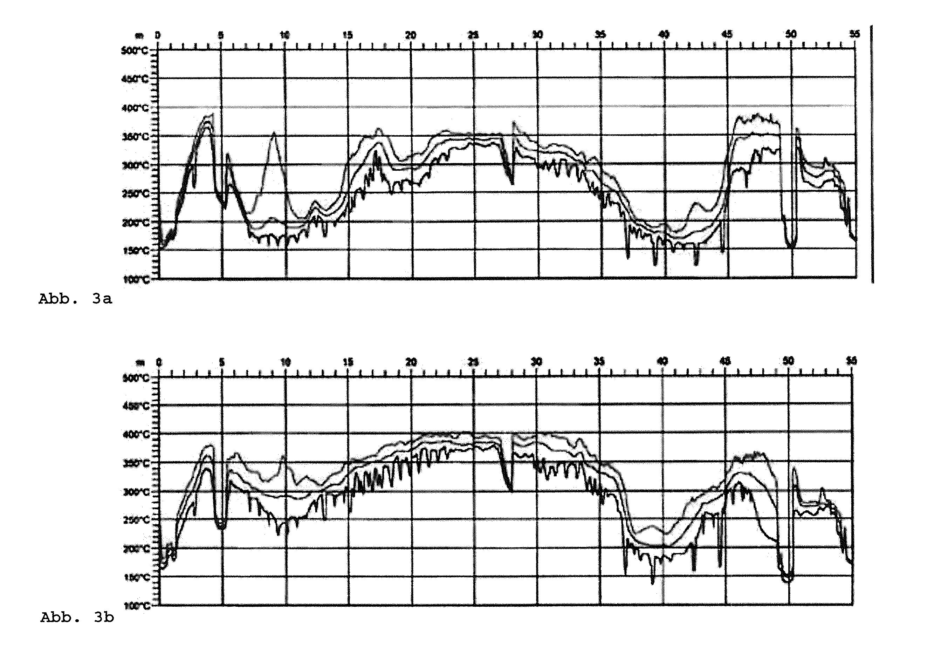

Abbildungen 3a und 3b stellen einen typischen Oberflächentemperaturverlauf auf der Außenoberfläche eines Drehrohrofens dar. Abbildung 3a zeigt den Oberflächentemperaturverlauf eines Drehrohrofens, der über die ganze Ofenlänge luftgekühlt wird. Abbildung 3b veranschaulicht einen entsprechenden Oberflächentemperaturverlauf ohne Luftkühlung über die ganze Ofenfläche.

### Genaue Beschreibung der Erfindung

Das erfindungsgemäße Verfahren zum Behandeln von Bypassstäuben und Bypassgasen eignet sich grundsätzlich zur Anwendung in allen Industrieanlagen, die mindestens einen Drehrohrofen umfassen. Bei Drehrohröfen kann es sich beispielsweise um direkt-beheizte Drehrohröfen handeln, in den das Produkt der Industrieanlage im direkten Kontakt mit dem entstehenden Rauchgas steht. Alternativ kann es sich dabei um indirekt beheizte Drehrohröfen handeln, bei denen die Wärmezufuhr von außerhalb des Reaktionsraumes über die Drehrohrwand übertragen wird. Aus Gründen der Energieeffizienz ist es allerdings bevorzugt, das erfindungsgemäße Verfahren in Industrieanlagen mit einem oder mehreren direkt beheizten Drehrohröfen, insbesondere in Anlagen zur Zementherstellung, Ziegelherstellung oder Klinkerherstellung anzuwenden.

Die Begriffe *"Bypassstaub"* und *"Bypassgas",* wie diese hierhin verwendet werden, umfassen sämtliche Staub- und Gasströme, die in einer Industrieanlage, die mindestens einen Drehrohrofen umfasst, von dem Hauptstrom abgetrennt werden. Im Falle einer Zementherstellungsanlage, Ziegelherstellungsanlage oder Klinkerherstellungsanlage, werden die Bestandteile des Zements, der Ziegel, bzw. des Klinkers von dem Hauptstrom abgetrennt. Sie können danach dem Hauptstrom, an gleicher oder anderer Stelle, ggf. nach einer Aufarbeitung bzw. Entfernung bestimmter Bestandteile, wieder zugeführt werden. Sie können alternativ auch verworfen werden.

Der Begriff *"Bypassleitung"* bezeichnet eine Leitung, die von dem Hauptstrom der Industrieanlage, beispielsweise von dem Hauptstrom der zur Ziegel-, Zement- oder Klinkerherstellung benötigten Ausgangsstoffe abzweigt. Die Bypassleitung kann dann ggf. zu dem Hauptstrom der zur Ziegel-, Zement- oder Klinkerherstellung benötigten Ausgangsstoffe zurückführen.

In dem erfindungsgemäßen Verfahren wird der Bypassstaub bzw. das Bypassgas im Schritt a) in Kontakt mit einer wässrigen Phase gebracht. Dies kann z.B. dadurch erreicht werden, dass der Bypassstaub bzw. das Bypassgas nach dem Prinzip einer Gaswaschflasche durch ein Rohr in die wässrige Phase eingeleitet wird. Alternativ kann das Bypassgas/der Bypassstaub mittels eines Sprührohrs oder einer Berieselungsanlage, die sich aus mehreren Sprührohren zusammensetzt, in Kontakt mit der wässrigen Lösung gebracht werden. Dies kann im Gleich- oder Gegenstrom vorgenommen werden. Die hieraus resultierende wässrige Lösung, die die löslichen Bestandteile in gelöster Form sowie die wasserunlöslichen Bestandteile des Bypassgases bzw. -staubs enthält (d.h. die gebildete Aufschlämmung) wird in diesem Fall gesammelt, gegebenenfalls von wasserunlöslichen (festen) Stoffen befreit und der nachstehend beschriebenen Weiterbehandlung unterzogen.

Bei der im Schritt a) verwendeten wässrigen Phase kann es sich um Wasser, zum Beispiel demineralisiertes Wasser, Leitungswasser, Trinkwasser oder Brauchwasser (d.h. Wasser, das keine Trinkwasserqualität aufweist) handeln. Die Verwendung des Brauchwassers ist dabei ökonomisch vorteilhaft. Um den Wasserverbrauch der Industrieanlage zu reduzieren, kann der bei dem Verdampfen der wässrigen Lösung entstehende Wasserdampf aus dem Schritt b) mittels einer Abzugsvorrichtung aufgefangen, kondensiert und als wässrige Phase verwendet werden. Wenn die wasserlöslichen Bestandteile der wässrigen Lösung teilweise oder vollständig mittels fraktionierter Kristallisation abgetrennt werden, kann die dabei gewonnene Mutterlauge ebenfalls als wässrige Phase verwendet werden. Bei einer solchen Verfahrensweise wird bevorzugt, dass die Temperatur während der fraktionierten Kristallisation geringer ist als die Temperatur während des Schritts a), sodass eine effiziente Auflösung der wasserlöslichen Bestandteile in der wässrigen Phase gewährleistet werden kann.

Des Weiteren kann die wässrige Phase eine oder mehrere Hilfssubstanzen enthalten, um das Behandeln von Bypassstäuben und Bypassgasen zu begünstigen und um die Reinigungswirkung bzw. die Aufnahme von flüchtigen Bestandteilen zu unterstützen. In diesem Zusammenhang ist es z.B. möglich, der wässrigen Phase eine oder mehrere Hilfssubstanzen zuzusetzen, die aus anorganischen Substanzen (vorzugsweise Chloride, Nitrate, Sulfide und Sulfate der Alkali- und Erdalkalimetalle als auch Ammoniumpolysulfid) und organischen Substanzen (vorzugsweise Salze chelatierender Säuren, wie Na₂-EDTA) ausgewählt werden. Hierbei umfassen die organischen und anorganischen Substanzen auch Säuren, wie z.B. Mineralsäuren (wie z.B. HCl, H₂SO₄, H₃PO₄ usw.) und/oder organische Säuren (wie z.B. Ameisensäure, Essigsäure), und Basen, wie z.B. anorganische Basen (z.B. NaOH, KOH, LiOH, Ca(OH)₂) und/oder organische Basen (z.B. stickstoffhaltige organische Basen, wie z.B. Triethylamin und Pyridin).

Die Zugabe von anorganischen Substanzen kann die Löslichkeit der Bestandteile des Bypassgases/des Bypassstaubes in der wässrigen Phase beeinflussen. Zum Beispiel kann durch Zugabe von Natriumnitrat die Löslichkeit von Natriumchlorid verringert werden. Durch Zugabe von Sulfiden, Polysulfiden oder anderen Anionen schwer löslicher Schwermetallsalze zu der wässrigen Phase ist es möglich, die Aufnahme von Metallen wie As, Be, Br, Cd, Cr, F, Hg, I, Ni, Pb, Tl, V und Zn zu erleichtern, da diese dann als schwerlösliche Salze (z.B. als Sulfide) ausfallen. Diese können dann vor einer möglichen Rückgewinnung der in dem Bypassstaub/dem Bypassgas enthaltenen und beim in-Kontakt-bringen mit dem Bypassstaub in der wässrigen Phase gelösten Alkali- und Erdalkalimetallsalze separat abgetrennt werden, um den Gehalt dieser oben erwähnten Metalle bzw. derer Salze in dem nach Abtrennung der unlöslichen Bestandteile und Entfernung des Lösungsmittels aus der wässrigen Phase während und/oder nach dem Schritt b) erhaltenen wässrigen Bestandteilen möglichst gering zu halten.

Die Zugabe organischer Salze oder Säuren zu der wässrigen Phase kann eine löslichkeitsverbessernde Wirkung auf Metalle ausüben, da diese dann in Lösung komplexiert werden und somit dem Bypassgas/dem Bypassstaub entzogen werden. Dies kann bei einer evtl. Rückführung der abgetrennten nicht-flüchtigen Bestandteile in den Herstellungsprozess in der Industrieanlage, z.B. in den Zement-, Klinker- bzw. Ziegelherstellungsprozess vorteilhaft sein, da diese Metalle dann nicht bzw. in geringerer Menge in den rückgeführten nicht-flüchtigen Bestandteilen (und somit im Endprodukt, z. B. dem Ziegel, dem Zement bzw. dem Klinker) enthalten sind. Dies kann zur Reduzierung der Schwermetallbelastung auch günstig sein, wenn die nicht-flüchtigen Bestandteile nicht zurückgeführt, sondern entsorgt werden.

Wenn der wässrigen Phase organische oder anorganische Hilfssubstanzen zugesetzt werden, beträgt die Konzentration dieser organischen und/oder anorganischen Substanzen in der wässrigen Phase vorzugsweise 0,01 - 10 Gew.-%, stärker bevorzugt 0,1 - 5 Gew.-%, und am stärksten bevorzugt 0,5 - 3 Gew.-%. Für eine möglichst ökonomische Prozessführung ist die Verwendung von Wasser (Leitungs- bzw. Brauchwasser) als wässrige Phase bevorzugt, wohingegen die Verwendung einer wässrigen Phase, die eine oder mehrere der o.g. Hilfssubstanzen enthält, aus den o.g. genannten Gründen für eine bessere Auswaschung der löslichen Substanzen oder zur Entfernung von unerwünschten Stoffen (z.B. Fällung als Schwermetallsulfide) vor der möglichen Weiterverwendung oder vor der Entsorgung der wässrigen Phase bevorzugt sein kann.

Bei entsprechenden Hilfssubstanzen kann es sich beispielsweise um anorganische Substanzen, insbesondere Salze wie Chloride, Nitrate, Sulfide oder Sulfate der Alkali- und Erdalkalimetalle oder auch Ammoniumpolysulfid handeln. Die wässrige Phase kann auch organische Substanzen wie beispielsweise chelatisierende Säuren wie EDTA enthalten. Die letzteren erhöhen die Löslichkeit der Schwermetallionen in der wässrigen Lösung und begünstigen somit deren Abtrennung von wasserunlöslichen Bestandteilen.

In der vorliegenden Anmeldung bezieht sich der Begriff *"wasserlösliche Bestandteile"* auf anorganische oder organische Substanzen, welche im Schritt a) in der wässrigen Phase gelöst werden und somit Bestandteile der wässrigen Lösung werden. Die *"wasserunlöslichen Bestandteile"* sind hingegen amorphe oder kristalline Feststoffe, welche nach dem Schritt a) von der wässrigen Lösung durch eine Filtration abgetrennt werden können. Bei wasserlöslichen Bestandteilen und wasserunlöslichen Bestandteilen kann es sich beispielsweise um Bestandteile der Bypassstäube oder Bypassgase handeln. Allerdings können die wasserlöslichen Bestandteile und die wasserunlöslichen Bestandteile auch chemische Reaktionsprodukte der Bypassstäube und Bypassgase mit der wässrigen Phase enthalten.

Dadurch, dass das Bypassgas/der Bypassstaub in Kontakt mit der wässrigen Phase gebracht wird bzw. hierin eingeleitet wird, lösen sich die wasserlöslichen Bestandteile in der wässrigen Phase. Die wasserunlöslichen Bestandteile werden vorzugsweise von der gebildeten Aufschlämmung abgetrennt, z.B. durch Filtration oder durch Zentrifugieren. Die hierbei abgetrennten wasserunlöslichen Bestandteile (z.B. der erhaltene Filterkuchen) weisen eine maßgeblich verringerte Konzentration an unerwünschten Alkali- und Erdalkalisalzen (wie Chloriden, Sulfaten etc.) als auch an unerwünschten Schwermetallen wie As, Be, Cd, Co, Cr, Cu, Hg, Mn, Ni, Pb, Sb, Sn, Te, Tl, V auf. Somit können, falls gewünscht, die abgetrennten wasserunlöslichen Bestandteile (z.B. der Filterkuchen im Fall einer Filtration) gegebenenfalls in das in der Industrieanlage durchgeführten Verfahren, z. B. in den Zement- bzw. Klinkerherstellungsprozess zurückgeführt werden, ohne das dies zur Anreicherung des Produkts der Industrieanlage des resultierenden Zements bzw. Klinkers mit diesen unerwünschten Substanzen führt. Die abgetrennten wasserunlöslichen Bestandteile können auch einer intensiveren Reinigung unterzogen werden, z.B. durch Extraktion des Filterkuchens im Falle einer Filtration, um den Gehalt an unerwünschten Bestandteilen weiter zu reduzieren. In kleinem Maßstab kann solch eine Extraktion z.B. durch Soxleth-Extraktion durchgeführt werden. Großtechnisch lässt sich solch eine Extraktion z.B. mit einem mixer-settler (Mischabsetzer) durchführen.

Die wasserlöslichen Bestandteile, deren Präsenz in der Industrieanlage, z. B. während der Zement- bzw. Klinkerherstellung unerwünscht sind, und die sich im Schritt a) in der wässrigen Phase hierin lösen, setzen sich im Wesentlichen aus Chloriden und anderen flüchtigen Bestandteilen, wie Sulfaten (bzw. SO₃) zusammen, können aber auch andere Bestandteile, wie Schwermetalle oder Nitrate enthalten. Wenn die wasserunlöslichen Bestandteile des Bypassstaubs nach dem in-Kontakt-bringen mit der wässrigen Phase im Schritt a) und ihrer Abtrennung (z.B. mittels Filtration) wieder dem Rohmehl zugesetzt werden, kann hierdurch eine wesentliche Verringerung des Chloridanteils erreicht werden. Vorzugsweise beträgt der Chloridanteil der wasserunlöslichen Bestandteile nach dem in-Kontakt-bringen mit der wässrigen Phase im Schritt a) und ihrer Abtrennung hiervon weniger als 20 Gew.-%, stärker bevorzugt weniger als 10 Gew.-%, weiterhin stärker bevorzugt weniger als 5 Gew.-%, und am stärksten bevorzugt weniger als 2 Gew.-% des Chloridanteils des Gases/des Staubes vor dem Einleiten durch die wässrige Phase (Gew.-%), d.h. des Chloridanteils der Ausgangsmaterialien.

Das erfindungsgemäße Verfahren kann auf kontinuierliche oder diskontinuierliche (batch) Weise geführt werden. Dies trifft sowohl auf das in-kontakt-bringen des Bypassstaubs bzw. -gases mit der wässrigen Phase im Schritt a) als auch die Aufarbeitung der hieraus resultierenden wässrigen Lösung (der gebildeten Aufschlämmung) zu.

Bei einer kontinuierlichen Verfahrensführung beim in-Kontakt-bringen des Bypassstaubs mit der wässrigen Phase im Schritt a) kann entweder ein Strom von Bypassgas bzw. -staub mit einer Charge (frischer oder aufbereiteter) wässriger Phase in Kontakt gebracht werden, oder es können sowohl Bypassgas bzw. -staub als auch die (frische oder aufbereitete) wässrige Phase kontinuierlich zugeführt werden.

Im ersten Fall kann der Strom des Bypassstaubs bzw. des -gases ggf. bis zur Sättigung der Charge der wässrigen Phase mit löslichen Bestandteilen in Kontakt mit der Charge der wässrigen Phase gebracht werden, z.B. durch Einleitung hierin. Hierbei beträgt das Verhältnis der Charge der wässrigen Phase zu dem Mengenstrom des Bypassstaubs/des Bypassgases vorzugsweise im Bereich von 0,5 - 100 h, stärker bevorzugt im Bereich von 1 - 50 h, weiterhin stärker bevorzugt im Bereich von 1,5 - 20 h, am stärksten bevorzugt im Bereich von 2 - 12 h, ausgedrückt als [Gewicht der Charge der wässrigen Phase / kg] : [Mengenstrom des Bypassgases/des Bypassstaubs / kg h⁻¹].

Im zweiten Fall werden im Schritt a) der Bypassstaub bzw. das -gas und die wässrige Phase in kontinuierlicher Weise zugeführt. Hierbei beträgt das Verhältnis des Mengenstroms der wässrigen Phase zu dem Mengenstrom des Bypassstaubs bzw. des -gases bevorzugt im Bereich 0,5 - 100, stärker bevorzugt im Bereich von 0,8 - 50, weiterhin stärker bevorzugt im Bereich von 1,0 - 20, und am stärksten bevorzugt im Bereich von 1,2 - 6, ausgedrückt als [Mengenstrom der wässrigen Phase/kg h⁻¹] : [Mengenstrom des Bypassgases/des Bypassstaubs/kg h⁻¹]. Während das hierzu verwendete Verfahren nicht besonders beschränkt ist, kann hierbei z.B. die wässrige Phase kontinuierlich über eine Berieselungsanlage oder ein oder mehrere Sprührohe in Kontakt mit dem Strom des Bypassgases/des Bypassstaubs gebracht werden. Dies geschieht vorzugsweise in einer Bypassleitung.

In den obigen Ausführungen zur kontinuierlichen Verfahrensführung beim in-Kontakt-bringen des Bypassstaubs mit der wässrigen Phase bezieht sich das Gewicht des Mengenstroms des Bypassstaubs/des Bypassgases auf das Gewicht der bei Raumtemperatur festen Bestandteile, d.h. die Bestandteile des Ausgangsmaterials.

Bei einem diskontinuierlichen Verfahren beim in-Kontakt-bringen des Bypassstaubs bzw. des -gases mit der wässrigen Phase im Schritt a) wird der Bypassstaub bzw. das -gas zunächst gesammelt, um dann eine Charge des Bypassstaubs in Kontakt mit der wässrigen Phase zu bringen. Hierbei beträgt das Gewichtsverhältnis der wässrigen Phase zum gesammelten Bypassstaub bzw. -gas (d.h. das Verhältnis [Gewicht der Charge der wässrigen Phase / kg] : [Gewicht der Charge des gesammelten Bypassstaubs bzw. -gases / kg]) vorzugsweise im Bereich von 0,1- 10, stärker bevorzugt 0,8 - 8, und weiterhin stärker bevorzugt 1 - 2,5, wenn eine Charge der wässrigen Phase verwendet wird. In einem diskontinuierlichem Verfahren kann der gesammelte Bypassstaub auch in die wässrige Phase bis zur ihrer Sättigung eingeleitet bzw. hiermit in Kontakt gebracht werden. Die wässrige Phase kann dann gegebenenfalls durch frische bzw. aufbereitete wässrige Phase ersetzt werden, falls dies gewünscht ist. Auch kann kontinuierlich oder in Intervallen frische oder aufbereitete wässrige Phase zu der Charge des gesammelten Bypassstaubs bzw. des -gases zugeführt werden, während verbrauchte bzw. gesättigte wässrige Phase ggf. aus dem Bereich des in-Kontakt-bringens entfernt wird.

Die aus dem kontinuierlichen oder diskontinuierlichen in-Kontakt-bringen des Bypassstaubs mit der wässrigen Phase erhaltene Aufschlämmung, inklusive der wasserunlöslichen, festen Bestandteile, kann entweder kontinuierlich oder diskontinuierlich aufgearbeitet werden, wobei die wasserunlöslichen Bestandteile vorzugsweise abgetrennt werden und die erhaltene wässrige Lösung gegebenenfalls zum Erhalt der hierin enthaltenen wasserlöslichen Bestandteilen im Schritt b) weiterbehandelt wird. Hierbei kann die Weiterbehandlung der wässrigen Lösung nach dem Schritt a) auch mehrere Schritte umfassen, z.B. eine Abtrennung von den oben erwähnten Schwermetallen (As, Be, Cd, Co, Cr, Cu, Hg, Mn, Ni, Pb, Sb, Sn, Te, Tl, V) vor dem Schritt b), z.B. mittels Sulfidfällung, so dass die während und/oder nach dem Schritt b) erhaltenen wasserlöslichen Bestandteile einen reduzierten Gehalt an diesen Metallen aufweisen. Dies kann für die weitere Verwendung dieser wasserlöslichen Bestandteile vorteilhaft sein. In einer weiterhin bevorzugten Ausführungsform können die Schwermetalle mittels geeigneter Ionentauscher-Harze von der wässrigen Lösung abgetrennt und wiedergewonnen werden. Die hierfür geeigneten Ionentauscher-Harze sind dem Fachmann bekannt und umfassen unter anderem Harze mit Carboxylgruppen oder Sulfonsäuregruppen. Entsprechende Ionentauscher-Harze sind beispielsweise unter Handelsnamen Lewatit^{®} (Lanxess), Dowex^{®} (Dow Chemicals) und Amberlite^{®} (Rohm and Haas) kommerziell erhältlich.

In einer bevorzugten Ausführungsform des erfindungsgemäßen Verfahrens können die nicht-flüchtigen (d.h. die bei der Temperatur im Bypass festen oder flüssigen) Bestandteile des Bypassstaubs/des Bypassgases vor dem Einleiten in die wässrige Phase im Schritt b) abgetrennt werden. Dies kann durch konventionelle Techniken erreicht werden, wie z.B. durch Verwenden eines Masssenkraft-, filternden und elektrischen Abscheiders. Einzelheiten der hierin verwendbaren Abscheider sind dem Fachmann bekannt; darüber hinaus kann auf F. W. Locher, "Zement: Grundlagen der Herstellung und Verwendung", Verl. Bau und Technik, Düsseldorf 2000, verwiesen werden. Die Abtrennung der nicht-flüchtigen Bestandteile vor dem in-Kontakt-bringen mit der wässrigen Phase hat den Vorteil, dass die Schlammbildung in der wässrigen Phase unterdrückt bzw. reduziert werden kann, was die Aufarbeitung und Weiterverwendung der wässrigen Lösung erleichtert. Ferner weisen die abgetrennten nicht-flüchtigen Bestandteile einen gegenüber der Ausgangssubstanz (z.B. dem Rohmehl) reduzierten Chloridgehalt auf und können somit der Ausgangssubstanz (z.B. dem Rohmehl) bzw. dem Brennprozess wieder zugeführt werden, ohne den Chloridgehalt des Endprodukts nachteilig zu erhöhen, da bei den Temperaturen im Bypass die Chloride im Wesentlichen in der Gasphase vorliegen. In diesem Fall führt das in-kontakt-bringen des Gases/des Staubes nach Abtrennung der nicht-flüchtigen Bestandteile mit der wässrigen Phase dazu, dass die Chloridkonzentration und die Konzentration anderer umweltschädlicher Abgase reduziert wird, wenn das Bypassgas/der Bypassstaub nach Abtrennung der nicht-flüchtigen Bestandteile und nach der Einleitung in die wässrige Phase nicht in den Herstellungsprozess rückgeführt wird. Wie bereits oben erwähnt können die vor dem in-Kontakt-bringen des Bypassstaubs bzw. des -gases mit der wässrigen Phase abgetrennten festen (nicht-flüchtigen) Bestandteile auch einer zusätzlichen Reinigung (z.B. durch Waschen oder mittels Extraktion) unterzogen werden, um den Gehalt unerwünschter Substanzen vor einer möglichen Rückführung in den Herstellungsprozess in der Industrieanlage, z.B. in den Zementherstellungsprozess weiter zu verringern.

Im Schritt a) wird Bypassstaub bzw. Bypassgas in die wässrige Phase eingeleitet bzw. in Kontakt mit der wässrigen Phase (z.B. durch eine Berieselung) gebracht, und hierdurch lösen sich die wasserlöslichen Bestandteile in der wässrigen Phase. Es kann solange Bypassstaub/gas eingeleitet werden, bis die Löslichkeitsgrenze der wasserlöslichen Bestandteile erreicht ist. Die wasserlöslichen Bestandteile kristallisieren dann (ggf. nach dem Abkühlen) als Salze aus der gesättigten bzw. übersättigten wässrigen Lösung aus. Wie bereits erwähnt, können vorher z.B. Schwermetalle aus der erhaltenen wässrigen Lösung abgetrennt werden.

Es ist bevorzugt, die wässrige Lösung nach dem in-Kontakt-bringen mit dem Bypassgas/dem Bypassstaub im Schritt a) und vor dem ggf. vorgenommenen Auskristallisieren der Salze zu filtrieren oder die wasserunlöslichen Bestandteile auf andere Weise (zum Beispiel durch Zentrifugieren) abzutrennen. Die abgetrennten wasserunlöslichen Bestandteile enthalten weniger unerwünschte Bestandteile (wie z.B. Chloride) und können daher anschließend dem Brenn- bzw. Produktionsprozess in der Industrieanlage wieder zugeführt werden.

Somit ermöglicht das erfindungsgemäße Verfahren die Verwendung von Abfallstoffen mit größerem Chloridgehalt (d.h. größer 1 Gew.-%) als Ersatzbrennstoff in der Industrieanlage, insbesondere im Zement-, Klinker- bzw. Ziegelherstellungsprozess, da die hierin enthaltenen Chloride durch das erfindungsgemäße Verfahren im Wesentlichen (d.h. zu mehr als 80 %, vorzugsweise zu mehr als 90 %, stärker bevorzugt zu mehr als 95 %, und am stärksten bevorzugt zu mehr als 98 % abgetrennt werden und sich somit nicht im Endprodukt wieder finden.

Anschließend wird die wässrige Lösung auf eine Außenoberfläche des Drehrohrofens aufgetragen, wobei die wässrige Lösung vorzugsweise im oberen Teil des Drehrohrofens verteilt aufgegeben wird. Die bevorzugte Position der Außenoberfläche, auf die die wässrige Lösung aufgetragen wird, ist einzelfallabhängig und kann von einem Fachmann aufgrund seines Fachwissens und seiner Erfahrung gewählt werden. So kann es beispielswese vorteilhaft sein, dass sich die Außenoberfläche des Drehrohrofens, auf die die wässrige Lösung aufgetragen wird, sich zumindest teilweise in der Sinterzone des Drehrohrofens befindet. Da die Sinterzone der heißeste Teil des Drehrohrofens ist, wird dabei die wässrige Lösung während und/oder nach dem Schritt b) besonders schnell aufgewärmt und, zumindest teilweise, verdampft. Dies führt dazu, dass die wässrige Lösung aus der Verwertung des anfallenden Bypassstaubs der Industrieanlage, z.B. einer Zementanlage bei einem Ersatzbrennstoff-Einsatz und genügend Frischwassereinsatz zur Herstellung eines relativ salzarmen festen Bypassstaubrückstandes verdampft wird.

In einer weiteren bevorzugten Ausführungsform befindet sich die Außenoberfläche des Drehrohrofens, auf die die wässrige Lösung aufgetragen wird, unterhalb der Sinterzone. Diese Ausführungsform erlaubt eine besonders effiziente und rasche Abkühlung des Produkts der Industrieanlage, sodass unerwünschte Nebenreaktionen, die sonst während einer langsameren Abkühlung auftreten könnten, effizient unterdrückt werden. So kann beispielsweise im Falle einer Zementherstellungsanlage Zement mit einem besonders geringen Dicalciumsilikat-Anteil hergestellt werden. Zugleich bewirkt eine schnelle Abkühlung, dass vermehrt Magnesiumoxid in die Klinkerfasern eingebaut wird, sodass es bei der Härtung des resultierenden Zementes zu geringeren Treiberscheinungen durch freies Magnesiumoxid kommt.

Industrieanlagen, die mindestens einen Drehrohrofen umfassen, und für das erfindungsgemäße Verfahren eingerichtet sind, haben mehrere Vorteile gegenüber vergleichbaren Industrieanlagen mit einer Luftkühlung. Durch die Erwärmung und zumindest eine teilweise Verdampfung der wässrigen Lösung auf der Außenoberfläche des Drehrohrofens wird dessen Oberfläche effizient gekühlt. Somit kann der Einsatz von Luftgebläsen, welcher üblicherweise zur Kühlung der Sinterzone erforderlich ist, reduziert werden oder entfallen. Dies führt zu einer signifikanten Reduktion des Betriebslärms sowie des Energieverbrauchs durch die Kühlgebläse. Des Weiteren wird die Industrieanlage durch das erfindungsgemäße Verfahren weniger anfällig gegenüber Brennstoffschwankungen. Auf Grund der verbesserten Ansatzverhältnisse sind zudem sowohl die feuerfeste Auskleidung des Drehrohrofens als auch der Ofenmantel geringeren thermischen und mechanischen Belastungen ausgesetzt.

Um eine möglichst schnelle Erwärmung und Verdampfung der wässrigen Lösung im Schritt b) zu erreichen, ist es bevorzugt, dass die Außenoberfläche des Drehrohrofens, auf die die wässrige Lösung aufgetragen wird, eine ausreichend hohe Oberflächentemperatur aufweist. Vorzugweise beträgt die Oberflächentemperatur an jeder Stelle der Außenoberfläche des Drehrohrofens, auf die die wässrige Lösung aufgetragen wird, mindestens 40 °C, noch bevorzugter mindestens 60 °C, besonders bevorzugt mindestens 80 °C. Hierdurch wird gewährleistet, dass für den Schritt b) eine vergleichsweise geringe Drehrohrofenlänge gebraucht wird. Zudem kann die ansonsten erforderliche und lärmintensive Luftkühlung teilweise oder ganz entfallen.

Der genaue Oberflächentemperaturverlauf auf der Außenoberfläche des Drehrohrofens ist von dem Aufbau und Zweck der Industrieanlage abhängig. Auf Grund seiner Erfahrung ist der Fachmann in der Lage, in jedem konkreten Fall den Oberflächentemperaturverlauf zu analysieren, und die geeignete Position der Außenoberfläche, auf die die wässrige Lösung aufgetragen wird, entsprechend festzulegen. Vorzugsweise verdampft die wässrige Lösung während und/oder nach dem Schritt b) zumindest teilweise auf der Außenoberfläche des Drehrohrofens, sodass die wasserlöslichen Bestandteile der wässrigen Lösung auf der Außenoberfläche des Drehrohrofens als Feststoffe haften bleiben. Diese können anschließend, beispielsweise mittels einer mechanischen Vorrichtung, wie zum Beispiel eines Schabeisens von der Außenoberfläche des Drehrohrofens entfernt werden. Die entsprechende Vorrichtung kann im unteren Bereich der Außenoberfläche des Drehrohrofens montiert werden, sodass die Verweilzeit der wässrigen Lösung auf der Außenoberfläche des Drehrohrofens für eine weitgehend vollständige Verdampfung des Wassers aus der wässrigen Lösung ausreichend ist. Die so erhaltenen festen wasserlöslichen Bestandteile, das heißt die Salzrückstände nach der Verdampfung werden von der Außenoberfläche des Drehrohrofens abgetrennt und können beispielsweise in einer darunterliegenden Transporteinrichtung gesammelt werden.

In einer weiteren Ausführungsform wird die wässrige Lösung auf die Außenoberfläche des Drehrohrofens so aufgetragen, dass es nur zu einer teilweisen Eindampfung kommt. Beispielsweise kann die wässrige Lösung auf ca. 70% des Volumens vor dem Schritt b), vorzugsweise auf ca. 50% des Volumens vor dem Schritt b), besonders bevorzugt auf ca. 30% des Volumens vor dem Schritt b) eingedampft werden. Die so erhaltene konzentrierte wässrige Lösung kann anschließend abgekühlt werden, sodass es zu einer fraktionierten Kristallisation der wasserlöslichen Bestandteile kommt. Folglich weisen die isolierten kristallinen wasserlöslichen Bestandteile eine besonders hohe Reinheit auf und sind somit wirtschaftlich wertvoller. Die dabei anfallende Mutterlauge kann anschließend im Schritt a) als wässrige Phase wiederverwendet werden.

Die Auftragung der wässrigen Lösung auf die Außenoberfläche des Drehrohrofens im Schritt b) kann mit Hilfe von einer oder mehreren Vorrichtungen erfolgen, die eine ausreichend gleichmäßige Verteilung der wässrigen Lösung über die Außenoberfläche des Drehrohrofens gewährleisten. Insbesondere sind hierfür Sprühvorrichtungen gut geeignet.

Bevorzugt weist die wässrige Lösung im Schritt b) eine ausreichend hohe Temperatur auf, so dass deren anschließende Verdampfung bzw. Eindampfung auf der Außenoberfläche des Drehrohrofens gewährleistet wird. Demnach ist es bevorzugt, dass die Temperatur der wässrigen Lösung im Schritt b) mindestens 40 °C beträgt, noch bevorzugter mindestens 60 °C, besonders bevorzugt mindestens 80 °C. In einer anderen Ausführungsform, insbesondere wenn die Effizienz der Kühlung des Drehrohrofens im Vordergrund steht, kann die Temperatur der wässrigen Lösung im Schritt b) bei nicht mehr als 70 °C, noch bevorzugter bei nicht mehr als 50 °C, oder sogar bei nicht mehr als 30 °C liegen.

Der Wasserdampf, der während und/oder nach dem Schritt b) gebildet wird, wird vorzugweise mittels einer geeigneten Abzugsvorrichtung aufgefangen. Dieser kann anschließend gemeinsam mit der Klinkerkühlerabluft von eventuellem Salzstaub gereinigt werden. Nach der Kondensation und ggf. Abkühlung eignet sich das resultierende Wasser zur Verwendung als wässrige Phase im Schritt a). Eine entsprechende Verwendung des Wasserdampfes erlaubt eine zusätzliche Reduktion des Wasserverbrauchs der Industrieanlage.

Die genaue Zusammensetzung der wässrigen Lösung, die im Schritt b) auf die Außenoberfläche des Drehrohrofens aufgetragen wird, hängt von dem Verfahren ab, das in der Industrieanlage durchgeführt wird. In der Regel enthält die wässrige Lösung Halogenide der Alkali- und Erdalkalimetalle wie Natriumchlorid oder Kaliumchlorid. Damit die Korrosion der Außenoberfläche des Drehrohrofens, auf die die wässrige Lösung im Schritt b) aufgetragen wird, vermieden werden kann, ist es von Vorteil, diese mit einer entsprechenden Korrosionsschutzschicht zu versehen. Beispielsweise kann die Außenoberfläche des Drehrohrofens vollständig oder teilweise mit einem Blech ausgekleidet werden, wobei das Material des Blechs an die Zusammensetzung der wässrigen Lösung sowie die Temperatur der Außenoberfläche des Drehrohrofens entsprechend angepasst werden kann.

In einer Ausführungsform kann das Blech für diesen Zweck aus Titan bestehen. Ein hierfür geeignetes Titanblech kann, auf Grund der Festigkeit des Materials, vergleichsweise dünn gestaltet werden. Dadurch wird wenig Material verbraucht, sodass die geeignete Titankorrosionsschutzschicht mit einem geringen Kosteneinsatz aufgetragen werden kann.

Alternativ kann das Blech jedoch aus Stahl, z.B. aus Normalstahl (z.B. Kesselblech) oder aus Edelstahl bestehen. So können beispielsweise für Temperaturen unterhalb 60 °C Stahlsorten wie 1.4571 oder 1.4539 verwendet werden. Diese weisen bei niedrigeren Temperaturen eine ausreichend hohe Korrosionsstabilität auf. Für Außenoberflächentemperaturen oberhalb 60 0 °C ist es allerdings sinnvoll, Stahlsorten wie 1.4561 (Alloy 31) einzusetzen, um einen ausreichenden Ofenmantelschutz zu gewährleisten.

Abbildungen 3a und 3b zeigen einen typischen Oberflächentemperaturverlauf auf einem Drehrohrofen mit bzw. ohne Luftkühlung über die ganze Ofenlänge. Der Vergleich der beiden Figuren zeigt, dass durch die Entwicklung und Installation der Ofenmantelkühlung die Oberflächentemperatur wirksam reduziert werden kann. Somit sind die Drehrohrofenanlagen weniger anfällig gegenüber Brennstoffschwankungen, was insbesondere bei Einsatz von Ersatzbrennstoffen relevant ist. Auf Grund der verbesserten Ansatzverhältnisse sind sowohl die feuerfeste Auskleidung als auch der Ofenmantel des Drehrohrofens geringeren Belastungen ausgesetzt. Dies verlängert die Lebensdauer des Drehrohrofens und verringert die Häufigkeit der Reparaturen und Wartungsarbeiten. Insbesondere im Hinblick auf die Tatsache, dass Drehrohröfen, unabhängig von deren Verwendungszweck, in der Regel 24 Stunden am Tag, 7 Tage die Woche betrieben werden und ein hochwertiges Investitionsgut darstellen, ist dies von großer Bedeutung.

Bei den nach dem erfindungsgemäßen Verfahren erhaltenen Salzen, die im Wesentlichen aus isolierten wasserlöslichen Bestandteilen bestehen, handelt es sich in der Regel um Akali- und Erdalkalimetallsalze, insbesondere um entsprechende Chloriden. Diese können anschließend diversen Verwendungen zugeführt werden. Mögliche Verwendungen umfassen die Verwendung als Streusalz, Leckstein, Rohstoff für Elektrolysen zur Chlor- und/oder Alkalihydroxidgewinnung, Flammschutz, Dustbinder, als Düngerkomponente oder zur Glas- bzw. Keramikherstellung.

Aus Umweltgesichtspunkten kann es erforderlich sein, die Menge an umweltschädlichen Stoffen in der wässrigen Lösung nach Entfernung der weiterverwendbaren Bestandteile (d.h. z.B. die Alkali- und Erdalkalimetallsalze, insbesondere die Chloride) gering zu halten. Insbesondere darf die zu verwerfende wässrige Lösung keine unerlaubten Konzentrationen an Fremdbestandteilen, wie Be, Br, Cd, Cr, F, Hg, I, Ni, Pb, Tl, V und Zn, enthalten. Hierzu kann es zweckmäßig sein, die wässrige Lösung nach Entfernung der weiterverwendbaren Bestandteile und vor einer möglichen Entsorgung einer chemischen Analyse zu unterziehen. Dies geschieht vorzugsweise in Echtzeit, d.h. es ist bevorzugt eine Analysevorrichtung im Abfallflüssigkeitsstrom installiert. Falls die Konzentrationen der o.g. Elemente zu hoch sein sollten, kann die Abfallflüssigkeit einer weiteren Behandlung unterzogen werden, wie z.B. einer Abtrennung von Schwermetallen durch Sulfidfällung, wie sie auch vor der Gewinnung der weiterverwendbaren Bestandteile durchgeführt werden kann, was vorstehend beschrieben ist.

Falls nicht anders angegeben, beziehen sich sämtliche Prozentangaben in der vorliegenden Anmeldung auf Gewichtsprozent.

Das nachfolgende Beispiel veranschaulicht die Wirkung des erfindungsgemäßen Verfahrens.

### Beispiel 1

Die Wärmeübergangsverhältnisse bei dem erfindungsgemäßen Verfahren wurden mittels Wärmeübergangsrechnung untersucht.

Hierzu wurden Berechnungen für einen ungekühlten Drehrohrofen, einen luftgekühlten (Gebläsekühlung) Drehrohrofen und für einen Drehrohrofen unter Anwendung des erfindungsgemäßen Verfahrens durchgeführt. Der Temperaturverlauf vom Ofeninneren durch den Ofenmantel wurde bis an die Oberfläche berechnet. Zusätzlich zu den üblichen Wärmeübergangs- und Wärmeleitungswerten, wurde der Strahlungsübergang von den heißen Ofengasen auf den Innenmantel berücksichtigt.

Die erhaltenen Werte sind nachfolgend in der Tabelle 1 zusammengefasst.

**Tabelle 1**

| | | ungekühlt | Gebläse gekühlt | Soleverdampfung |
|---|---|---|---|---|
| | | | | |
| Wärmeverlust | % | 100 | 103 | 112 |
| | | | | |
| Temperatur Umgebung aussen | °C | 30 | 30 | 30 |
| Temperatur Ofenmantel außen | °C | 305 | 253 | 104 |
| Temperatur Ofenmantel innen | °C | 309 | 256 | 108 |
| Temperatur Refractory innen | °C | 1967 | 1966 | 1963 |
| Temperatur Ofenheissgas | °C | 2000 | 2000 | 2000 |

Wie durch die Ergebnisse der Berechnungen belegt wird, beeinflusst die Verdampfung der wässrigen Lösung den Wärmeübergang (Wärmeverlust) und vor allem die refractory Innentemperatur nur geringfügig. Somit führt die Verwendung des erfindungsgemäßen Verfahrens zu keiner signifikanten Erhöhung des Brennstoffeinsatzes.

## Patentansprüche

1. Verfahren zum Behandeln von Bypassstäuben und Bypassgasen aus einer Industrieanlage, die einen Drehrohrofen umfasst, wobei das Verfahren folgende Schritte umfasst:
a) die Bypassstäube/Bypassgase werden mit einer wässrigen Phase in Kontakt gebracht, wobei es zur Bildung einer wässrigen Lösung kommt, in der wasserlösliche Bestandteile gelöst sind; und
b) die wässrige Lösung wird auf eine Außenoberfläche des Drehrohrofens aufgetragen.

2. Verfahren nach Anspruch 1, bei dem während und/oder nach dem Schritt a) die wässrige Lösung, in der wasserlösliche Bestandteile gelöst sind, von wasserunlöslichen Bestandteilen abgetrennt wird.

3. Verfahren nach Anspruch 1 oder 2, bei dem während und/oder nach dem Schritt b) die wässrige Lösung auf der Außenoberfläche des Drehrohrofens zumindest teilweise verdampft wird.

4. Verfahren nach einem der Ansprüche 1 bis 3, bei dem während und/oder nach dem Schritt b) die wasserlöslichen Bestandteile als Feststoffe auf der Außenoberfläche des Drehrohrofens abgeschieden werden.

5. Verfahren nach Anspruch 4, bei dem während und/oder nach dem Schritt b) die wasserlöslichen Bestandteile als Feststoffe von der Außenoberfläche des Drehrohrofens mechanisch abgetrennt werden.

6. Verfahren nach einem der Ansprüche 1 bis 5, bei dem sich die Außenoberfläche des Drehrohrofens, auf die die wässrige Lösung aufgetragen wird, zumindest teilweise in der Sinterzone des Drehrohrofens befindet.

7. Verfahren nach einem der Ansprüche 1 bis 6, bei dem die Auftragung der wässrigen Lösung auf die Außenoberfläche des Drehrohrofens mittels einer Sprühvorrichtung erfolgt.

8. Verfahren nach einem der Ansprüche 1 bis 7, bei dem der Wasserdampf, der während und/oder nach dem Schritt b) gebildet wird, mittels einer Abzugsvorrichtung aufgefangen wird.

9. Verfahren nach einem der Ansprüche 1 bis 8, bei dem die Außenoberfläche des Drehrohrofens, auf die die wässrige Lösung aufgetragen wird, zumindest teilweise mit einem Blech ausgekleidet ist.

10. Verfahren nach einem der Ansprüche 1 bis 9, bei dem die Industrieanlage eine Zementherstellungsanlage oder eine Klinkerherstellungsanlage ist.

11. Industrieanlage, insbesondere eine Zementherstellungsanlage oder eine Klinkerherstellungsanlage, die zum Durchführen des Verfahrens nach Ansprüchen 1 bis 10 eingerichtet ist.
